# NEUE EUROPÄISCHE PATENTSCHRIFT

(11) **EP 2 543 285 B2**
(45) Veröffentlichungstag und Bekanntmachung des Hinweises auf die Entscheidung über den Einspruch: **08.08.2018**
(45) Hinweis auf die Patenterteilung: 13.11.2013
(21) Anmeldenummer: 12175278.6
(22) Anmeldetag: 06.07.2012
(51) Int. Cl.: A47J 27/08, A47J 27/092

(54) **Druckgargerät und damit durchführbares Verfahren**
Pressure cooker and accompanying method
Dispositif de cuisson sous pression et procédé à exécuter

(30) Priorität: 06.07.2011 DE 102011107255; 17.11.2011 DE 102011118779
(43) Veröffentlichungstag der Anmeldung: 09.01.2013
(60) Teilanmeldung: 13190721.4
(73) Patentinhaber: MKN Maschinenfabrik Kurt Neubauer GmbH & Co. KG, 38300 Wolfenbüttel (DE)
(72) Erfinder: Socher, Michael, 47249 Duisburg (DE); Ruhe, Dirk, 38667 Bad Harzburg (DE)
(74) Vertreter: Strobel, Wolfgang

(56) Entgegenhaltungen:
- EP-A1- 1 342 441
- US-A- 2 555 230
- US-A- 3 823 657

## Beschreibung

Die Erfindung betrifft ein Druckgargerät mit einem Kochbehälter, einem Kochgerätedeckel und einem Garraum sowie mit Mitteln zum Abbau des Druckes im Garraum, bei dem im Kochgerätedeckel oder im Kochbehälter oberhalb des Kochgutes eine Öffnung des Garraumes vorgesehen ist, bei dem die Öffnung über eine Leitung, insbesondere eine Rohrleitung mit einem Eingang eines Ablöschkastens verbunden ist, bei dem der Ablöschkasten einen Ausgang aufweist, und bei dem eine Wassereinspritzung dem Ablöschkasten zugeordnet ist, über welche Wasser in den aus dem Garraum über den Ablöschkasten entweichenden Dampf einspritzbar ist.

Die Erfindung betrifft ferner ein Verfahren zum Abbau des Druckes im Garraum eines Druckgargerätes mit einer aus dem Garraum führenden verschließbaren Leitung zum Abführen von Dampf aus dem Garraum, mit einem Stellventil und mit einer Wassereinspritzung, über die Wasser in den aus dem Garraum über das Stellventil entweichenden Dampf einspritzbar ist zum Druckabbau nach einem Kochprozess in einem derartigen Druckgargerät.

Druckgargeräte bieten die Möglichkeit, Speisen unter Druck bei Luftabschluss zu garen. Diese Zubereitungsform für Speisen ermöglicht eine besonders schonende und auch schnelle Form der Produktzubereitung. Solche Druckgargeräte gibt es sowohl für Anwendungen in Haushalten, als auch als Großküchengerät.

Mehrere Gerätetypen dieser Druckgargeräte, auch als Druckgarer bezeichnet, sind am Markt verfügbar. Dazu gehören Druckgarbraisieren, bei denen die Zubereitung der Speisen direkt in einem Braisiertilgel erfolgt, Druckkochkessel, bei denen die Zubereitung in einem Kesselbehälter erfolgt, und Dampfgarer, bei denen die Zubereitung der Speisen in hierfür vorgesehenen Gastronorm-Behältern erfolgt. Diese Gastronorm-Behälter können aber auch zusätzlich bei den beiden erstgenannten Typen eingesetzt werden.

Bei allen Druckgargeräten muss nach dem Abschluss des Garprozesses, der wie erwähnt unter Druck stattgefunden hat, dieser Druck im Garraum auch wieder abgebaut werden. Dafür gibt es verschiedene Möglichkeiten. So ist es zum Beispiele bei Dampfgarern bekannt, Wasser als Kühlmedium direkt in den Garraum einzuspritzen. Durch die Abkühlung erfolgt automatisch der gewünschte Druckabbau. Ein in den Gastronom-Behälter integrierter Ablauf ermöglicht das Abfließen des entstehenden unerwünschten Kondensates. Nachteilig ist der entstehende Wasserverbrauch und die durch das Abfließen des Kondensates entstehenden Verluste und Abwässer.

Eine gegenüber diesen bekannten Vorschlägen wesentlich verbesserte Möglichkeit zum Druckabbau ist aus der EP 1 342 441 A1 bekannt. Diese Druckschrift schlägt einen Druckabbauprozess vor, der wiederum mit der Beendigung des Kochprozesses eingeleitet wird. Der Druck aus dem Garraum wird kontrolliert über eine Öffnung mittels nachgeschaltem Stellventil abgebaut. Das Öffnen dieses Stellventils erfolgt in Abhängigkeit des im Garraum vorhandenen Druckes oder alternativ auch einer gemessenen Temperatur, die über einen Sensor ermittelt wird. Nach dem Stellventil ist eine Wassereinspritzung in den entweichenden Dampf vorgesehen. Dies führt zu einer kontrollierten Kondensation.

Dies eröffnet verschiedene Möglichkeiten. So kann etwa mittels einer zusätzlichen Funktionstaste die Möglichkeit eines beschleunigten Druckabbaus angeboten werden. Angeregt wird auch ein Druckabbau in mehreren Stufen, der frei wählbar möglich sein könnte. Weitere Unterteilungen wären denkbar, sodass unterschiedlichste Druckabbaugeschwindigkeiten realisiert werden könnten.

Dies hätte den Vorteil, dass auch eine Zubereitung besonders empfindlicher Speisen wie etwa Blumenkohl in derartigen Geräten möglich wird. Derartige empfindliche Speisen benötigen einen schonenden, langsamen Druckabbau.

Die entsprechend der EP 1 342 441 A1 arbeitenden und am Markt angebotenen Geräte sind bereits sehr vorteilhaft und schonend, auch wenn ein Druckabbau in mehreren Stufen noch nicht realisiert ist. Die Umsetzung dieser Vorschläge bereitet Schwierigkeiten. Zwar kann ein Druckabbau verlangsamt werden, es besteht jedoch unverändert der Wunsch, den Druckabbau bei derartigen Druckgargeräten noch besser an die unterschiedlichen Anforderungen anzupassen, die durch empfindliche und weniger empfindliche Speisen gestellt werden, wobei gemäß EP 1 342 441 A1 der Öffnungsgrad der Leitung zeitlich gesteuert wird.

Der vorliegenden Erfindung liegt die Aufgabe zugrunde, für die Anpassung an empfindliche und weniger empfindliche Speisen eine optimierte Anpassung des Druckabbaus vorzuschlagen, wodurch ein besseres Garergebnis erzielt werden kann.

Diese Aufgabe wird durch die Merkmale des Anspruchs 1 gelöst.

Dadurch, dass die Leitung zumindest über einen Teilabschnitt durch mehrere strömungstechnisch parallel zueinander aufgebaute Teilleitungen gebildet wird, und dass der Öffnungsgrad der Leitung dadurch zeitlich gesteuert wird, dass der Öffnungsgrad einer jeden Teilleitung zeitlich gesteuert wird, kann eine feine Anpassung des Öffnungsgrades der Gesamtleitung erreicht werden, was zu einer stärkeren Vergleichmäßigung des Druckabbaus sowie zu einer Vergleichmäßigung des Dampfstroms führt.

Zusätzlich hat sich herausgestellt, dass ein Druckabbau mit zeitlichen Taktungen, einem gepulsten Öffnen und insbesondere Vorteile erzielt werden, wenn mit Verweilzeiten eingeschoben werden können. Wie sich herausgestellt hat, sind diese Verweilzeiten von einem außerordentlich positiven Einfluss auf das Garergebnis bei empfindlichen Speisen.

Durch die Verweilzeit wird empfindlichem Gargut die Gelegenheit gegeben, sich nicht nur mit mehr oder weniger rascher Geschwindigkeit von dem Druck während des Kochprozesses auf den Atmosphärendruck umzustellen, sondern es wird stufenweise eine erhebliche Zeit eingeräumt. Wie sich bei Versuchen herausgestellt hat, verhält sich empfindliches Gargut tatsächlich so, dass es sich durch die Verweilzeiten besonders gut an die geänderten Druckbedingungen anpasst.

Bildlich gesprochen, kann man dieses Vorgehen etwa mit dem Verhalten eines auftauchenden Tauchers vergleichen, der aus einer großen Tiefe in Etappen auftaucht und in Zwischenhöhen jeweils pausiert. Auch dieser Taucher legt Verweilzeiten ein; dies ist offensichtlich einem lediglich verlangsamt durchgeführten Auftauchvorgang überlegen. Ähnlich verhält es sich mit empfindlichen Speisen.

Dort, wo die Speisen weniger empfindlich sind, kann auf die Verweilzeiten entsprechend verzichtet werden, sodass entsprechend die Zubereitungszeiten verkürzt werden können, ohne das Garergebnis zu verschlechtern. Die Erfindung berücksichtigt diese verschiedenen Möglichkeiten und schafft dadurch eine noch weiter verbesserte Anpassung an die unterschiedlichen Speisen, die in einem Druckgargerät zubereitet werden können.

Besonders bevorzugt lässt sich der Öffnungsgrad der Leitung bzw. der Teilleitungen dadurch zeitlich steuern, dass für jede Teilleitung ein Motorventil eingesetzt wird und der Öffnungswinkel des entsprechenden Motorventils, der den Öffnungsgrad der Leitung bzw. Teilleitung insgesamt angibt, zeitlich gesteuert wird.

Um Ventile besonders zuverlässig einsetzen zu können, werden sie in Leitungen eingesetzt, die als Rohrleitungen aufgebaut sind. Dabei kann eine Anordnung aus mehreren Motorventilen eingesetzt werden, um eine besonders zuverlässige und präzise Steuerung des Öffnungsgrades der Leitung zu erhalten.

Besonders bevorzugt wird in jeder der Teilleitungen wiederum ein Ventil, etwa ein Motorventil, angeordnet, das den Öffnungsquerschnitt dieser Teilleitung angibt.

Die Öffnungsquerschnitte der Teilleitungen und damit der entsprechende Öffnungsgrad der Teilleitungen lässt sich für die Gesamtleitung dann wiederum in einen Öffnungsgrad mathematisch übertragen, der besonders präzise durch die einzelnen Öffnungsgrade bestimmt werden kann.

Auf diese Weise können auch relativ einfache Standardventile in den einzelnen Teilleitungen eingesetzt werden, die wesentlich kostengünstiger sind, als ein speziell ausgebildetes Motorventil für die Gesamtleitung. Es genügen dann auch Standardventile in den Teilleitungen, die nur eine stufenweise Einstellung des Öffnungsgrades der jeweiligen Teilleitung herbeiführen können. Durch das Zusammensetzen dieser dadurch möglichen Vielzahl an einzelnen Stufen aus den unterschiedlichen Teilleitungen lässt sich eine quasi kontinuierliche Bemessung und Steuerung des Öffnungsgrades der Gesamtleitung erreichen.

In einer bevorzugten Ausführungsform ist vorgesehen, jedem Gargut und/oder jedem Garprogramm eine geeignete Druckabbaustufe zuzuordnen. In der Gerätesteuerung werden hierzu die gewünschten Druckabbauarten hinterlegt. Die Gerätesteuerung oder auch manuell der Benutzer ordnet nun jedem Garprogramm in Abhängigkeit von dem empfindlichsten in dem Garraum befindlichen Gargut eine Druckabbaustufe zu.

Bevorzugt erhält der Benutzer auch die Möglichkeit, die Druckabbaustufen nachträglich anzupassen oder zu modifizieren. So ist es beispielsweise in der Praxis möglich, in einem Gargerät mit einem tiegelförmigen Garraum in einem unteren Bereich des Tiegels Gulasch unter Druck zu garen und zugleich im oberen Bereich Gastronormbehälter mit Kartoffeln oder Gemüse einzuhängen. Von der Steuerung ist in diesem Fall für das Druckgarprogramm "Gulasch" ein vergleichsweise schneller Druckabbau vorgesehen, da ein Gulasch unempfindlich gegenüber einer schnellen Druckänderung ist.

Mit dieser Ausführungsform der Erfindung hätte der Benutzer eines derartigen Gargerätes jetzt die Möglichkeit, etwa 10 Minuten vor dem Garende des Garprogrammes "Gulasch" den Prozessablauf zu unterbrechen, den im Garraum vorhandenen Druck abzubauen, um den Deckel zu öffnen, und dann die Gastronormbehälter mit dem Gemüse oder den Kartoffeln einzuhängen. Daraufhin würde er dann den Garprozess fortsetzen.

Bis zu diesem Zwischenschritt ist ein schneller Druckabbau möglich und auch gewünscht. Bei dem weiteren Vorgehen am Ende des Garprozesses würde der voreingestellte schnelle Druckabbau allerdings dem nun eingehängten Gemüse schaden. Der Benutzer erhält somit die Möglichkeit, auf einen schonende langsamere Druckabbaustufe zu wechseln.

Interessant ist es insbesondere, wenn der Druckabbau linear erfolgt. Physikalisch ausgedrückt bedeutet das, dass der Druckabbau mit einer konstanten Änderung gemessen beispielsweise in Pascal pro Sekunde angestrebt wird.

Die Formel würde also lauten: Δpt [Pa/s] = konstant

Eine andere alternative, aber ebenfalls interessante Möglichkeit wäre es, den Druckabbau so vorzunehmen, dass der im Garraum vorhandene Dampf mit einem konstanten Volumenstrom abgeführt wird. Ein derartiger konstanter Volumenstrom führt zu einer besonders niedrigen Geräuschentwicklung, da Spitzen vermieden werden, die besonders relevant für die Entwicklung von Schallereignissen sind. Der Öffnungsgrad beziehungsweise -winkel bei dieser alternativen Ausführungsform würde also dazu führen, dass der Volumenstrom konstant ist, und es zu einem relativ gleichmäßigen Druckabbau kommt.

Die jeweils erforderliche konkrete Steuerung des Öffnungsgrades beziehungsweise -winkels hängt von verschiedenen Parametern ab, die den Druckabbau im Garraum beeinflussen. Dazu gehört neben dem Betriebsdruck im Garraum auch der Energiegehalt im Garraum, der von der Größe des Garraumes sowie von der Art und der Menge des im Garraum befindlichen Gargutes abhängt. Einen weiteren Einfluss hat auch der Energieeintrag in den Garraum, der dadurch entsteht, dass auch bei ausgeschalteter Heizung die Heizfläche noch Restwärme an das Gargut abgibt, was zu einer Druckerhöhung im Garraum führt, welcher Druck bei dem Vorgang des Druckabbaus ebenfalls zu berücksichtigen ist.

Diese verschiedenen Einflussfaktoren und Effekte können jeweils durch Phasen mit unterschiedlichen und variierenden Öffnungsgraden beziehungsweise -winkeln und/oder Verweilzeiten eingekoppelt werden.

Eine technische Lösung zur Umsetzung arbeitet wie folgt. Es wird ein Motorventil mit definierbaren Zwischenpositionen eingesetzt, welches die komplexen Öffnungsvarianten für das anzusteuernde Ventil ermöglicht.

Mit einem solchen Motorventil wird es möglich, zeitlich gesteuert sehr variabel einen Öffnungswinkel in einem Rohrquerschnitt oder einem Leitungsquerschnitt oder - erfindungsgemäß - einem Querschnitt einer Teilleitung wie oben beschrieben anzusteuern, konstant zu halten und wieder zu reduzieren oder zu schließen.

Die Ventilanordnung aus den mehreren Motorventilen in den verschiedenen Teilleitungen kann dieses auch getaktet oder mit sich ändernden Zykluszeiten vornehmen und dadurch fein abgestimmt auf bestimmte, vorgegebene Randbedingungen eingehen, die beispielsweise von einem Drucksensor oder einer Gerätesteuerung zugeführt werden.

Die Einfügung der Verweilzeiten hat also einen sehr positiven Einfluss auf das Garergebnis, mit dem der Fachmann nicht ohne Weiteres rechnen konnte, wobei sich aber im Nachhinein durch die dem Gargut zur Verfügung gestellte Anpassungszeit eine Erklärung für das gute Garergebnis finden lässt.

Darüber hinaus lässt sich durch das erfindungsgemäße Vorgehen ein ausgezeichneter Kompromiss finden zwischen einerseits der häufig gewünschten Schnelligkeit eines Druckabbaus und damit dem zugehörigen Zeitgewinn und andererseits der schonenden Behandlung von solchen Speisen, die einer schonenden Behandlung auch dringend bedürfen. Auch der Wasserverbauch bei der Ablöschung des Dampfes in Folge der Wassereinspritzung kann so minimiert werden, da der abzulöschende Dampf auch entsprechend erfindungsgemäß optimiert wird.

Die Geräuscherzeugung ist ebenfalls reduziert und die Umweltbelastung minimal, da alle im Garraum entstehenden Wrasen ausreichend abgelöscht werden können, was bei nicht exakt vorhersehbaren und schwankenden Dampfmengen kritisch ist. Der konstante und insbesondere exakt vorhersehbare Dampfstrom während des Druckabbaus ermöglicht also nicht nur eine gute Gargutqualität, sondern hat auch weitere Vorteile.

In vielen Druckgarprozessen, die mit einem festgelegten Druck- und Temperaturniveau arbeiten, wird es gewünscht, diese Niveaus in einem relativ engen Toleranzbereich zu halten. Da Gargeräten mit einem hohen Nennvolumen für eine relativ große Menge an Gargut in der Regel auch über eine entsprechend leistungsfähige Heizung für den Garraum verfügen und dementsprechend auch schnell aufgeheizt werden können und sollen, neigen derartige Gargeräte aufgrund der Trägheit der wärmespeichernden Komponenten insbesondere in der Wandung und/oder im Boden des Garraumes zum Überschwingen der angesteuerten Werte für Temperatur und Druck.

Um einen gewünschten Maximalwert nicht zu überschreiten, kann es gewünscht sein, den Druck auch in einem laufenden Garprozess abzubauen. Zu diesem Zweck kann ein Querschnitt durch eine Druckabbaueinheit oder ein Überdruckventil freigegeben werden. Eine solche Lösung kann aber den Nachteil aufweisen, dass mehr Druck abgebaut wird, als unbedingt erforderlich ist. Es kann dann zu einem Überschwingen der Werte für Druck und Temperatur in beide Richtungen kommen.

Die erfindungsgemäße Konzeption bietet jedoch auch für diese Fallgestaltung eine Möglichkeit für eine Verbesserung des Verhaltens des Gargerätes und des mit dem Gargerät durchgeführten Verfahrens.

Durch einen zeitlich gesteuerten Öffnungsgrad beziehungsweise -winkel in der Leitung wird das Überschwingverhalten der Werte für Druck und Temperatur im Garraum reduziert.

In einer Ausführungsform der Erfindung ist es bevorzugt, wenn die Geschwindigkeit des Druckabbaus in Abhängigkeit von der Menge des Gargutes gesteuert wird. Diese Ausführungsform macht von der Erkenntnis gebrauch, dass bei einem maximal gefüllten Tiegel und einem schnellen Druckabbau, etwa bedingt durch ein schlagartiges Sieden, flüssiges Gargut in unerwünschter Form vermehr in die Druckabbauleitung eintreten kann und auf diese Weise dem Garvorgang verlorengeht. Dieser unerwünschte Effekt kann durch diese erfindungsgemäße Ausführungsform vermieden oder jedenfalls reduziert werden.

Der für die Steuerung verwendete Wert des Druckes im Garraum kann entweder direkt durch eine Messeinrichtung zur Messung des Druckes festgestellt werden, oder auch alternativ durch eine Messeinrichtung zur Messung der Temperatur im Garraum, wobei die Gerätesteuerung dann so ausgerüstet sein sollte, dass sie aus dieser Temperatur auf den Druck im Garraum rückschließen kann, und auf diese Weise dann doch den Druck für die weitere Steuerung heranzieht.

Möglich ist es außerdem, insbesondere am Ende eines Druckabbauvorgangs, also dann, wenn der Druckunterschied so gering ist, dass über die sonstigen Querschnitte der Volumenstrom sehr klein wird, mit einer Klappe zu arbeiten, die entsprechend geöffnet wird. Dies ist sehr kostengünstig und zugleich technisch zuverlässig.

Weitere bevorzugte Merkmale der Erfindung sind in den Unteransprüchen und in der folgenden Beschreibung der Figuren angegeben.

Im Folgenden wird anhand der Zeichnung die Durchführung von Ausführungsbeispielen der Erfindung näher erläutert. Es zeigen:
- Figur 1: eine schematische Darstellung des zeitlichen Verlaufs eines möglichen Verhaltens eines Motorventils;
- Figur 2: eine schematische Darstellung des zeitlichen Verlaufs eines anderen möglichen Verhaltens eines Motorventils;
- Figur 3: eine schematische Darstellung des zeitlichen Verlaufs eines dritten möglichen Verhaltens eines Motorventils;
- Figur 4: eine schematische Darstellung des zeitlichen Verlaufs eines vierten möglichen Verhaltens eines Motorventils;
- Figur 5: eine schematische Darstellung des zeitlichen Verlaufs eines fünften möglichen Verhaltens eines Motorventils;
- Figur 6: eine schematische Darstellung des zeitlichen Verlaufs eines sechsten möglichen Verhaltens eines Motorventils;
- Figur 7: eine schematische Darstellung möglicher Öffnungsgrade bei einer Ausführungsform eines erfindungsgemäßen Verfahrens; und
- Figur 8: eine schematische Darstellung einer Ausführungsform eines erfindungsgemäßen Druckgargeräts.

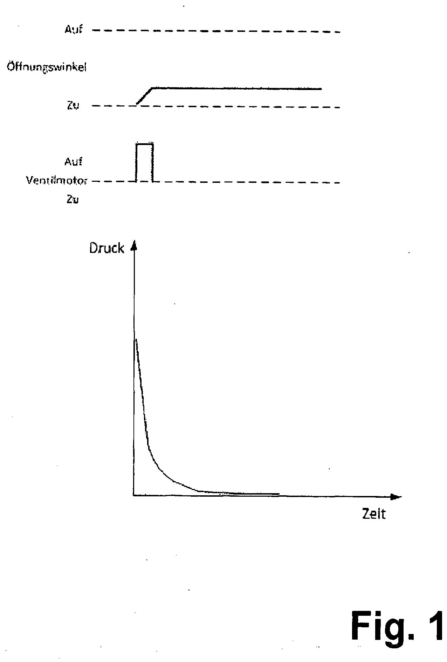

In den Figuren 1 bis 6 ist nach rechts die Zeit t aufgetragen, wobei jede Figur mehrere Kurven für unterschiedliche Größen aufweist. Nach oben sind die jeweiligen Größen aufgetragen, die beispielsweise die Stellung eines Motorventils, den Öffnungswinkel einer Leitung oder einen Druck im Garraum betreffen können. Der Begriff "Öffnungswinkel" ist hier für eine Leitung gewählt worden, um den Grad anzugeben, den ein Leitungsquerschnitt geöffnet ist. Hier könnte also auch eine Prozentangabe, eine Angabe in mm2, oder etwas ähnliches verwendet werden.

In der Figur 1 ist dargestellt, wie bei einem Druckgargerät mit einer durch ein Motorventil beziehungsweise einen Ventilmotor geführten Leitung zur Abführung von Dampf aus dem Garraum der Verlauf verschiedener Werte aussieht. Man sieht oben den Öffnungsgrad beziehungsweise -winkel, der sich in der Leitung einstellt.

Darunter ist der zeitliche Verlauf der Energieaufnahme des Ventilmotors dargestellt.

In der Figur 1 sieht man, dass der Ventilmotor für einen kurzen Moment angeschaltet und dann gleich wieder abgeschaltet wird. Entsprechend ist ein kurzer Balken zu sehen. Darüber sieht man den Effekt für den Öffnungswinkel in der Leitung. Die Leitung ist zunächst vollständig geschlossen, lässt mithin keinen Querschnitt für das Durchströmen von Dampf zu. Wird nun der Ventilmotor für einen kurzen Moment angestellt, so öffnet sich der Öffnungswinkel während dieses kurzen Moments geringfügig und bleibt nach dem Abschalten des Ventilmotors bei genau diesem Wert stehen.

In der unter diesen beiden Kurven dargestellten Kurve ist der Druck über den Verlauf mit der Zeit dargestellt. Bei geschlossenem Öffnungswinkel und nicht eingeschaltetem Ventilmotor ist der Druck mithin maximal. Sowie die Leitung bei Einschalten des Ventilmotors etwas geöffnet wird, sinkt der Druck rasch ab. Da der Öffnungswinkel nach Abschalten des Ventilmotors konstant ist, strömt weiter Dampf durch den geöffneten Bereich der Rohrleitung, sodass der Druck mit der Zeit weiter abnimmt.

Die Druckabnahme ist geschätzt in solchen Fällen exponentiell.

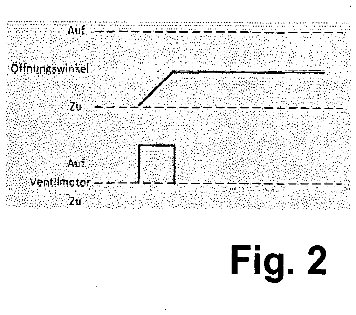

In der Figur 2 sieht man die entsprechende Kurve, wenn der Ventilmotor für einen etwas längeren Zeitraum eingeschaltet wird. Dies hat lediglich zur Folge, dass der Öffnungswinkel sich über einen etwas längeren Zeitraum hinweg vergrößert. Wird dann der Ventilmotor abgeschaltet, bleibt der Öffnungswinkel bei der dieser größeren Öffnung stehen.

Eine Darstellung des Druckes über die Zeit wäre hier entsprechend der Darstellung aus Figur 1, natürlich mit noch rascher abfallendem Druck.

Die beiden Kurven in den Figuren 1 und 2 erläutern lediglich die nun im Folgenden gegebenen Darstellungen eines erfindungsgemäßen Vorgehens, da sie Teilabschnitte für das Funktionieren des Systems näher erläutern.

Man sieht in den Figuren 1 und 2, dass bei einem derart einfachen Druckabbau die Druckreduktion am Anfang sehr groß ist und sich danach kontinuierlich verringert. Auch die durch die Einspritzung von Wasser abzulöschende Dampfmenge nimmt im späteren Verlauf kontinuierlich ab.

Mit der Erfindung wird dieser unerwünschte Effekt vermieden, wie in den im folgenden dargestellten Figuren zu sehen ist.

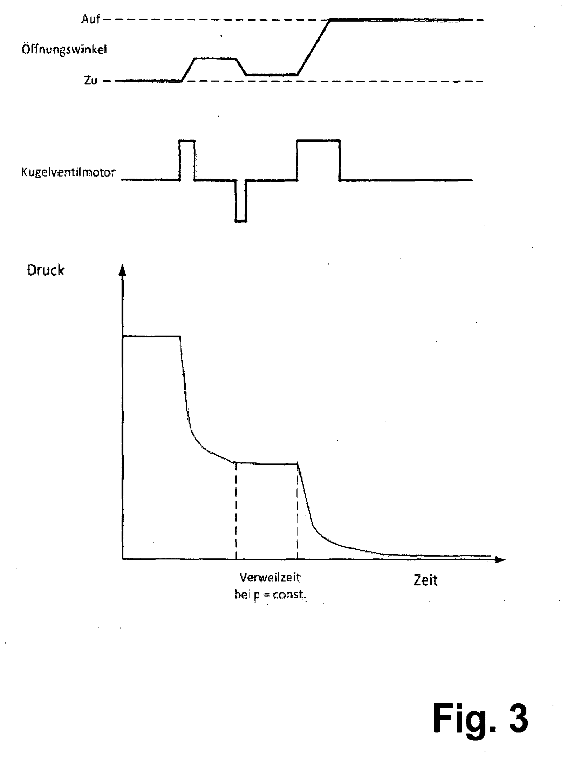

In der Figur 3 sieht man nun den Verlauf, der entsteht, wenn der Ventilmotor zunächst über eine bestimmte Einschaltzeit eingeschaltet wird, danach abgeschaltet wird und für eine bestimmte Verweilzeit im abgeschalteten Zustand verbleibt. Nach dieser ersten Verweilzeit reversiert der Ventilmotor. Nach einer weiteren Verweilzeit wird der Ventilmotor für eine zweite Einschaltzeit wieder eingeschaltet.

Der Öffnungswinkel in der Rohrleitung nimmt während der ersten Einschaltzeit zunächst zu, bleibt dann während der Verweilzeit konstant und nimmt während der zweiten Einschaltzeit. In Reversionsrichtung bis nahezu zum Schließzustand ab. Hier wird nun dem Gargut im Garraum eine Gelegenheit gegeben, sich den entstandenen, veränderten Druckbedingungen anzupassen. Das Gargut kann also das eigene Energieniveau absenken. Der Querschnitt der Leitung wird nicht vollständig geschlossen, um zu vermeiden, dass abhängig von der Größe des Garraums, der Rest Heizenergie, der Art des Gargutes und der Menge des Gargutes der Druck im Garraum wieder ansteigt.

Nachdem das empfindliche Gargut genügend Energie abgegeben und sich auf die veränderten Druckbedingungen eingestellt hat, wird der Ventilmotor nochmals eingeschaltet. Der maximale Öffnungszustand des Ventils beziehungsweise der Öffnungswinkel in der Rohrleitung wird somit freigegeben.

In der Figur 3 ist dabei schematisch eine Druckebene skizziert, die etwa mittig zwischen dem maximalen Arbeitsdruck im Garprozess und dem Umgebungsdruck liegt. Abhängig von dem Gargut sind auch weitere oder andere Druckebenen für die Verweilzeit mit jeweils für sich konstantem Druck möglich. Diese Druckebenen werden in ähnlicher Form durch das Freigeben jeweils definierter Öffnungswinkel erzeugt.

Diese Verweilzeit ist für empfindliche Gargüter sehr wertvoll, da sie in dieser Zeit sich auf einen anderen Druck einstellen können, bevor dann die nächste Druckabbauphase in Richtung hin zum atmosphärischen Druck beginnt.

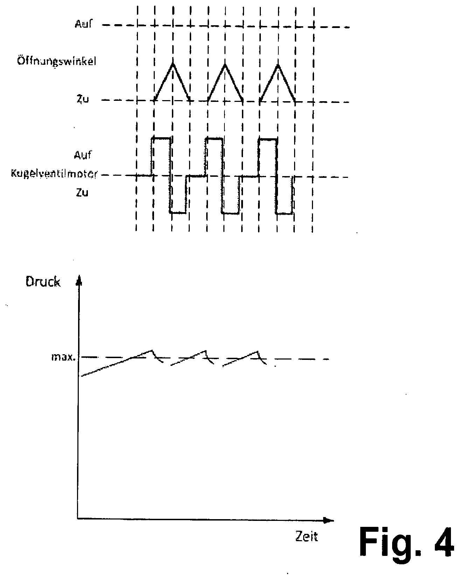

In der Figur 4 ist ein zeitlicher Verlauf dargestellt, der einen zwischenzeitlichen Druckabbau beschreibt, wie er etwa für eine Notentlastung erforderlich ist.

Eine solche Notentlastung wird beispielsweise durchgeführt, um ein Überschwingen der Werte für Druck und Temperatur während eines Garvorganges zu vermeiden bzw. zu reduzieren. Ein Überschwingen dieser Werte kann dadurch eintreten, dass bei besonders leistungsfähigen Heizungen von Gargeräten und schnellen Aufheizvorgängen die Trägheit der wärmespeichernden Komponenten in den Wandungen des Garraums ein solches Überschwingen hervorrufen.

In der Figur 4 ist nun dargestellt, dass sich durch einen zeitlich gesteuerten Öffnungswinkel in der Leitung dieses Überschwingverhalten reduzieren lässt. Dadurch entsteht eine Verbesserung des Verhaltens des Gargerätes.

Im Einzelnen ist angedeutet, dass der Leitungsquerschnitt der Druckabbauleitung zeitlich begrenzt teilweise freigegeben wird. Wie man leicht erkennen kann, würde eine vollständige Öffnung des Leitungsquerschnittes eine wesentlich stärkere Überschwingung hervorrufen. Man sieht, dass die Steuerung anhand der Steilheit einer Druckanstiegskurve den Leitungsquerschnitt der Druckabbauleitung zeitlich begrenzt freigeben kann.

Nähert sich beispielsweise der Druck langsam einem vorgegebenen maximal zulässigen Wert an, wird es in der Regel ausreichen, bei einer Überschreitung des maximal zulässigen Wertes für den Druck mit einem geringeren Öffnungswinkel gegen zu steuern.

Bei einem schnellen Druckanstieg kann die Steuerung einen größeren Querschnitt freigeben oder bevorzugt die Öffnungszeit bei teilgeöffnetem Querschnitt verlängern.

Man sieht hier, dass der Ventilmotor das Motorventil nicht nur öffnet, sondern auch in die Gegenrichtung fahren kann. Einem mäßig kurzem Zeitraum für ein Öffnen folgt ein gleich langer Zeitraum für das Schließen und ein dritter Zeitraum für das Geschlossen halten.

Ebenso zeigt sich der Öffnungswinkel der Leitung. Dieser zunächst geschlossene Öffnungswinkel nimmt zunächst kontinuierlich bis zu einem Maximum zu, und zwar während der Zeit des geöffnet seins des Motorventils. Danach wird der Öffnungswinkel wieder kontinuierlich von seinem Maximalwert in die geschlossene Position zurückgefahren, während der Ventilmotor in die andere Richtung dreht. Dann folgt eine dritte Zeitspanne, in der der Ventilmotor geschlossen ist und der Öffnungswinkel bei 0 bleibt. Danach sind weitere, gleichartige Phasen dargestellt. Genügt die auf diese Weise entstehende Entlastung nicht, kann beispielsweise die Öffnungszeit verlängert werden.

Die zugehörige Kurve des Druckes zeigt, dass hier während eines Garvorganges im Druckgargerät der Druck zunimmt und einen maximal zulässigen Wert übersteigt. Dieser maximal zulässige Wert führt in einer Steuerung dazu, dass der Ventilmotor wie in den oberen Kurven gezeigt angeschaltet wird, so dass Dampf durch die Leitung abgeführt werden kann, wodurch wiederum der Druck abnimmt und unter den maximal zulässigen Wert fällt.

Es kann dementsprechend dann der Ventilmotor wie beschrieben in der anderen Richtung angesteuert werden und der Öffnungswinkel wieder auf 0 gefahren werden. Während dieser Zeit entweicht noch Dampf, da ja noch ein Öffnungswinkel größer 0 vorhanden ist und der Druck fällt.

Während der Öffnungswinkel noch zugefahren wird und nur noch sehr wenig Dampf entweicht, baut sich in dem dargestellten Beispiel erneut Druck auf, der dann bei in der Zwischenzeit geschlossenem Öffnungswinkel wiederum den Maximalwert übersteigt und einen erneuten Zyklus zu laufen beginnen lässt:

Die Zyklen sind in der Regel nicht periodisch.

Auf diese Weise kann, sofern beabsichtigt, der Druck stets in Höhe etwa eines Maximaldruckes gehalten werden, indem der Zyklus immer wieder gefahren wird.

Sollte beabsichtigt sein, den Druck tatsächlich abzubauen, so würde man das Ventil in jedem Zyklus etwas mehr öffnen. Dazu würde die Einschaltzeit jeweils um einen Wert erhöht werden, beispielsweise um einen Wert von einer Sekunde, die als Parameter eingestellt werden kann.

Dieses Vorgehen ist ebenfalls für die in dem Garraum befindlichen Speisen sehr schonend, obwohl der Druck das Maximum erreicht hat. Es wird also nicht etwa schlagartig über ein Notventil der gesamte Druck abgelassen, sondern er wird schonend heruntergefahren oder er bleibt in der Höhe des maximalen Drucks, sofern dies beabsichtigt ist.

Die Ansteuerung des gewünschten Vorgehens kann in der Gerätesteuerung schon implementiert sein und gegebenenfalls wahlweise vom Benutzer ausgewählt werden.

Wie erörtert stellt die in der Figur 4 beschriebene Vorgehensweise eine Druckentlastung während des Garbetriebs dar. Dabei werden jedoch die Gerätesteuerung und die für die Steuerung des Druckabbaus bereits vorgesehenen elektronischen und mechanischen Komponenten genutzt, um Druckbedingungen, die über den typischen Werten eines Garprogrammes oder womöglich über den zulässigen Werten des Gargerätes insgesamt liegen, durch einen entsprechenden Druckabbau zu beseitigen und das Gargerät wieder in einen gewünschten, zulässigen Wertebereich zu bewegen und Druckbedingungen zu erzeugen, die zu den Werten des Garprogrammes der betreffenden Speise passen.

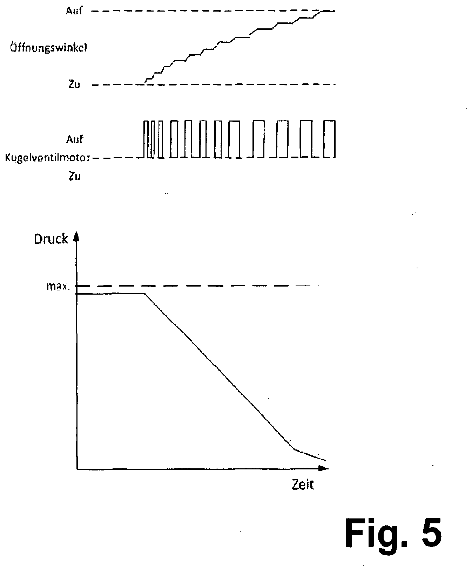

In der Figur 5 ist ein weiterer Verlauf angedeutet, bei dem wie zuvor im Zusammenhang mit Figur 4 beschrieben, die Einschaltzeiten ebenso wie die Verweilzeiten von Zyklus zu Zyklus steigen. Das führt dazu, dass der Öffnungswinkel sich von Zyklus zu Zyklus mehr vergrößert, aber die gleiche Anstiegsgeschwindigkeit hält. Der Öffnungswinkel wird also nicht nur in jedem Zyklus größer, sondern auch die Zeitspanne der Öffnung nimmt immer mehr zu.

Dieses Vorgehen kann auch zum regelmäßigen Abschalten nach Beendigung eines Kochprozesses herangezogen werden. Die Zyklen werden dabei solange fortgesetzt, bis schließlich der Normaldruck beziehungsweise der atmosphärische Druck im Garraum erreicht ist. Die Parameter mit den Einschaltzeiten und den Wartezeiten für den Ventilmotor werden von der Steuerung des Gargerätes vorgegeben.

Dabei kann die Gerätesteuerung in Abhängigkeit von dem vorher eingestellten Garprogramm für die gerade zubereitete Speise den geeigneten und optimalen Vorgang für das gegarte Gargut einstellen.

Es ist also möglich, hier zusätzlich auch noch weitere Verweilzeiten einzuschieben, in denen der Öffnungswinkel in einem bestimmten Bereich verharrt.

Wenn dagegen für ein bestimmtes Gargut ein schnellerer Druckabbau möglich oder gewünscht ist, kann dies durch steilere Flanken und/oder kürzere Taktung erzielt werden. Auch das kann in der Gerätesteuerung so hinterlegt werden.

Die eingezeichnete Kurve des Druckabbaus ist hier eine idealisierte Kurve, welche die einzelnen Peaks jeweils glättet. Diese idealisierte Kurve kann natürlich ebenfalls wie gewünscht mit zusätzlichen Verweilzeiten angereichert und durch diese unterbrochen werden.

Damit können die ohne die Erfindung bestehenden Probleme von starken Schwankungen der abzulöschenden Dampfmengen über die Zeit und des Qualitätsverlustes am Gargut vollständig vermieden werden.

Man sieht in der Figur 5, dass hier alle Möglichkeiten kombiniert werden beziehungsweise werden können. Es hat sich als sehr vorteilhaft herausgestellt, das Motorventil mit dem Ventilmotor in ansteigenden Intervallen aufzufahren. Je nach Speise kann zwischen den Intervallen dann eine Verweilzeit vorgesehen werden, um dem Gargut zusätzlich Zeit zu geben, sich zu entspannen und dem reduzierten Druck anzupassen.

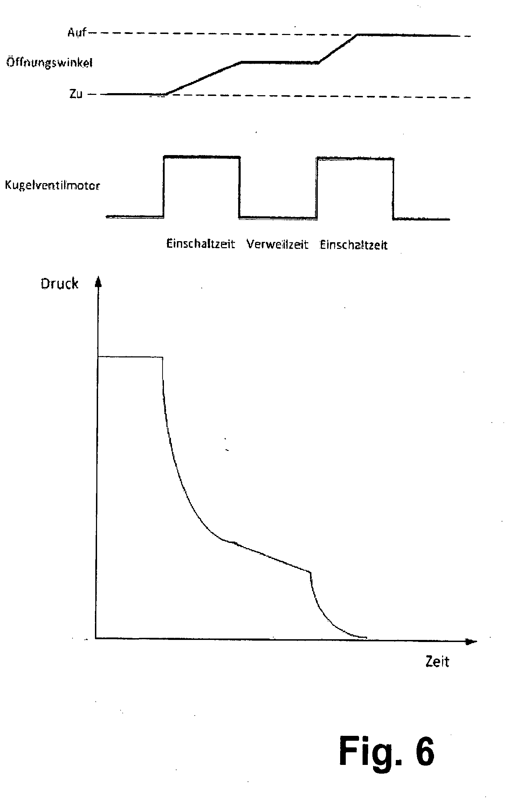

In der Figur 6 sieht man nun einen Verlauf, der entsteht, wenn der Ventilmotor zunächst für eine bestimmte Einschaltzeit eingeschaltet wird, anschließend abgeschaltet wird und für eine bestimmte Verweilzeit in diesem abgeschalteten Zustand verbleibt und dann schließlich für einen zweiten Zeitraum, also für eine zweite Einschaltzeit wieder eingeschaltet wird.

Der Öffnungswinkel in der Rohrleitung nimmt während der ersten Einschaltzeit zunächst zu, bleibt dann während der Verweilzeit konstant und nimmt schließlich während der zweiten Einschaltzeit bis zu einem maximalen Öffnungszustand zu.

Die ebenfalls eingezeichnete Kurve des zugehörigen Druckabbaus zeigt, dass der Druck im Garraum bei einem teilgeöffneten Querschnitt der Leitung von hier ungefähr 50% einen zunächst steil fallenden Verlauf nimmt. Der Druckabfall verlangsamt sich mit sinkender Druckdifferenz und würde bei gleichbleibendem Öffnungswinkel langsam einem Grenzwert zustreben, was zu einer insgesamt verlängerten Gesamtzeit des Druckabbaus führt. Wenn dies nicht erwünscht ist, was häufig der Fall sein wird, wird nach einer Verweilzeit der Querschnitt der Leitung vollständig freigeben.

Bereits bei dieser einfachen Form der zeitlichen Steuerung des Öffnungswinkels lässt sich erkennen, dass der Druckabbau von einer annähernd exponentiellen Kurve abweicht und einen gleichmäßigeren Verlauf aufweist. Durch eine feinere Abstufung (nicht dargestellt) mit Öffnungswinkeln von beispielsweise zunächst 10%, dann einer Verweilzeit bei 30%, einer zweiten Verweilzeit bei 60% und einer dritten Verweilzeit bei 100% Öffnungswinkel lässt sich ein nahezu linearer Druckverlauf erreichen, wie er idealisiert bereits in der Figur 5 angedeutet wurde.

Durch die gezielte Vergrößerung des freigegebenen Querschnitts der Leitung kann anstelle des linearen Druckverlaufs natürlich auch ein gleichmäßiger Dampfvolumenstrom erzeugt werden (nicht dargestellt), wenn dies erwünscht ist. Hierzu wählt der Benutzer beispielsweise eine Option des geräuschreduzierten Druckabbaus in der Steuerung des Gargerätes. Anhand des Differenzdrucks wird in diesem Fall der Öffnungswinkel so angepasst, dass sich ein konstanter Volumenstrom einstellt.

Man sieht, dass durch den in der Figur 6 skizzierten gestuften Verlauf bereits der (nicht gewünschte) Effekt vermieden wird, dass die Druckreduktion mit kontinuierlich a nehmendem Dampfstrom abgebaut wird. Der Druck wird nämlich relativ schnell, jedoch mit konstantem Dampfstrom abgebaut. Dies entspricht dann einem "normalen" Druckabbau, der durch eine Verlängerung der Verweilzeit bereits einen schonenderen Charakter bekommen kann.

Zur Steuerung der präzisen Öffnungsgrade einer Gesamtleitung ist es in einigen Ausführungsformen der Erfindung vorgesehen, dass über zumindest einen Teilabschnitt der Leitung zum Abführen von Dampf aus dem Garraum mehrere strömungstechnisch zueinander parallel verlaufende Teilleitungen vorgesehen sind. Diese Teilleitungen können dann je nach Ausführungsform jeweils mit einem Ventil geöffnet beziehungsweise geschlossen werden. Diese Ventile bilden dann zusammen eine Anordnung aus einem oder mehreren Motorventilen.

Bei Versuchen hat sich eine Anordnung aus zwei oder drei derartigen Teilleitungen mit je einem Ventil als besonders sinnvoll erwiesen, insbesondere zur Frage des optimalen Verhältnisses aus Kosten und Nutzen.

In anderen Ausführungsformen ist vorgesehen, in eine Leitung mehrere Ventile in Reihe hintereinander einzuschalten und dann die Querschnitte durch Abstufungen nacheinander abzustufen.

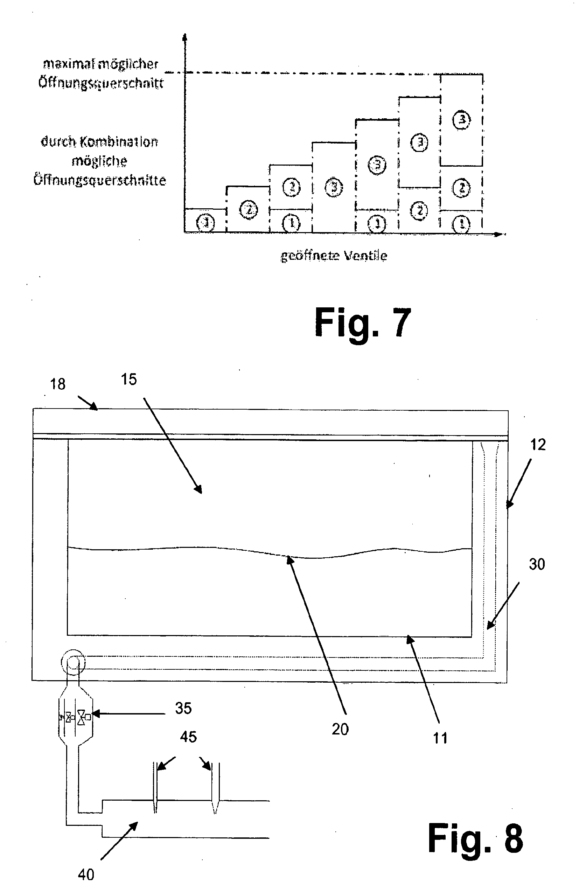

In der Figur 7 ist nun eine Parallelschaltung schematisch angedeutet, bei der durch die Ventile Öffnungsquerschnitte entweder insgesamt freigegeben oder insgesamt geschlossen werden können. Dies ist also einer sehr grobe Stufenregelung. Wird bei diesem Beispiel nun vorgesehen, dass es sich um drei Teilleitungen beziehungsweise Zweigleitungen handelt, die mit je einem derartigen Ventil zu öffnen oder zu schließen sind, und geht man davon aus, dass die Ventile als Beispiel einen Öffnungsquerschnitt der zugehörigen Teilleitung ermöglichen, welcher bei dem ersten Ventil 25 mm², bei dem zweiten Ventil 50 mm² und bei dem dritten Ventil 100 mm² ermöglichen, so ergibt sich bereits eine Abstufung von insgesamt 8 Öffnungsquerschnitten.

In der Figur ist dies dadurch angedeutet, dass der mögliche Öffnungsquerschnitt nach oben aufgetragen ist und in den dargestellten Rechtecken durch Angabe der Ziffern 1, 2 und 3 angegeben ist, welches der Ventile gerade eine Öffnung seines Querschnittes freigibt.

Während bei drei geschlossenen Ventilen selbstverständlich ein Gesamtöffnungsquerschnitt von 0 entsteht (daher nicht dargestellt), ergibt sich durch eine Kombination von einem, zwei unterschiedlichen oder allen drei Öffnungsquerschnitten jeweils ein anderer Gesamtquerschnitt, sodass eine Feinabstufung mit den insgesamt 8 erwähnten Werten entsteht.

Es sei am Rande angemerkt, dass eine ähnliche Konzeption auch geeignet wäre, eine Wasserzufuhr für das Druckgargerät ebenfalls effektiv und kostengünstig zu steuern. Dabei könnten dann in der Wasserzufuhrleitung ebenfalls mehrere zueinander parallel verlaufende Wasserzufuhrteilleitungen vorgesehen werden, die dann jeweils mit einem Ventil einer Ventilanordnung geöffnet oder geschlossen werden können. Bei dieser Zulaufdosierung ist dann ebenfalls mittels sehr weniger Standardventile eine sehr präzise und nahezu kontinuierliche Steuerung des Öffnungsquerschnittes und damit der zugeführten Wassermengen je Zeit möglich.

Es ist ferner möglich, die eingespritzte Wassermenge zusätzlich auch abhängig von dem Volumenstrom des Dampfes zu steuern.

Sowohl bei der Wasserzufuhr wie auch bei der entsprechenden Dosierung des Querschnittes in der Leitung zum Abführen von Dampf aus dem Garraum entsteht eine Kaskade zusammengefasster Ventile.

Die Ansteuerung ist recht einfach. Die mehreren Ventile müssen dann nur geöffnet und geschlossen werden, während bei einer komplexeren Anordnung mit nur einem Ventil dessen Ansteuerungszeiten präzise beobachtet werden müssen. Auch dies hat bei dem Vorhandensein präzise ansteuerbare Motorventile bei anderen Ausführungsformen aber auch Vorteile.

Die Steuerung vereinfacht sich auch dadurch, dass kein Startzustand präzise definiert werden muss, um etwa einen Querschnitt zur Hälfte freizugeben. Bei einem zeitlich steuerbaren Motorventil bedeutet dies ausgehend von einem geschlossenen Ventil 7,5 Sekunden Ventilmotorlaufzeit bei einer Gesamtlaufzeit von 15 Sekunden. Ist der Zustand in der Steuerung nicht bekannt, müsste zunächst eine Endlage angefahren werden. Erschwerend kommt hinzu, dass ein Kugelhahn den Querschnitt nicht linear freigibt. Anfangs bewirkt eine Ventilmotorlaufzeit von wenigen Sekunden eine große Änderung im freigegebenen Querschnitt. Ist der Durchlass weiter gedreht, bewirkt die Restdrehung allerdings einen geringeren Effekt.

Bei einer parallelen Anordnung aus mehreren Ventilen kann dagegen völlig unabhängig von den Ausgangsbedingungen der gewünschte Zustand eingestellt werden.

Auch die Verweilzeiten und die Druckentlastung mit wechselnden Querschnitten sind mit einer Parallelschaltung sehr gut realisierbar.

Ein weiterer Vorteil entsteht dann, wenn bei einer gewünschten Druckentlastung bei einem Überdruck oberhalb des Arbeitsbereiches nur das kleinste Ventil zu schalten ist.

Eine weitere Möglichkeit besteht in der Parallelschaltung einer Klappe beziehungsweise eines Magnetventils, welches erst nach Unterschreiten eines Schwellwertes des Druckes geöffnet werden kann.

Es entsteht mithin je nach Anwendungsfall eine günstige, steuerungstechnisch einfache und zuverlässige Lösung mit einer Parallelschaltung aus mehreren Ventilen.

Bei einer Schaltung mit nur einem Ventil ist dagegen der Platzbedarf, der konstruktive Aufwand und auch die Anzahl der Bauteile geringer.

In der Figur 8 ist ein Druckgargerät schematisch im Schnitt dargestellt. Man sieht einen Tiegel 10 mit einem Tiegelboden 11 und einer Tiegelwandung 12. Die Tiegelwandung 12 umgibt einen Garraum 15, in welchem sich ein Gargut 20 befindet. Der Garraum 15 ist nach oben durch einen Deckel 18 abgeschlossen.

In dem Garraum 15 kann ein Druck aufgebaut werden. Um diesen Druck in dem Garraum 15 abbauen zu können, ist eine Leitung 30 zum Abführen von Dampf aus dem Garraum 15 vorgesehen.

In der lediglich schematisch dargestellten Leitung 30 befindet sich eine Anordnung 35 mit einem oder mehreren Ventilen; in der dargestellten Ausführungsform ist eine Parallelschaltung mit drei Teilleitungen angedeutet, die von jeweils einem Ventil dieser Ventilanordnung 35 ganz oder teilweise geschlossen werden können.

Die Ventilanordnung führt dann zu einem Ablöschkasten 40. Im Bereich des Ablöschkastens 40 ist eine Wassereinspritzung 45 vorgesehen, mit der Wasser in den Dampf eingespritzt werden kann. Dieser Dampf strömt aus dem Garraum 15 über die Leitung 30 und die Ventilanordnung 35 sowie den Ablöschkasten 40 zu einem (nicht dargestellten) Ausgang.

### Bezugszeichenliste

10 Tiegel oder Kochbehälter
11 Tiegelboden
12 Tiegelwandung
15 Garraum
18 Deckel oder Kochgerätedeckel
20 Gargut
30 Leitung
35 Anordnung mit einem oder mehreren Ventilen
40 Ablöschkasten
45 Wassereinspritzung

## Patentansprüche

1. Verfahren zum Abbau des Druckes im Garraum (15) eines Druckgargerätes mit einer aus dem Garraum (15) führenden verschließbaren Leitung (30) zum Abführen von Dampf aus dem Garraum (15), mit einer Ventilanordnung (35) und mit einer Wassereinspritzung (40), über die Wasser in den aus dem Garraum (15) über die Ventilanordnung (35) entweichenden Dampf einspritzbar ist, wobei der Öffnungsgrad der Leitung (30) zeitlich gesteuert wird,
**dadurch gekennzeichnet,**
**dass** die Leitung (30) zumindest über einen Teilabschnitt durch mehrere strömungstechnisch parallel zueinander aufgebaute Teilleitungen gebildet wird, und
**dass** der Öffnungsgrad der Leitung (30) dadurch zeitlich gesteuert wird, dass der Öffnungsgrad einer jeden Teilleitung zeitlich gesteuert wird.

2. Verfahren nach Anspruch 1,
**dadurch gekennzeichnet,**
**dass** der Öffnungsgrad der Leitung (30) bzw. der Teilleitungen zeitlich so gesteuert wird, dass zwischen geöffneten Phasen Verweilzeiten mit einem reduzierten Öffnungsgrad oder einergeschlossenen Leitung (30) bzw. geschlossenen Teilleitungen eingeschoben werden.

3. Verfahren nach Anspruch 1 oder 2,
**dadurch gekennzeichnet,**
**dass** abhängig von einer Druckmessung im Garraum (15) und/oder abhängig von einer Druckbestimmung durch eine Messung der Temperatur und Rückschluss auf den Druck im Garraum(15) eine zeitlich begrenzte Öffnung der Leitung (30) bzw. der Teilleitungen und/oder eine Öffnung mit einem reduzierten Öffnungsgrad erfolgt.

4. Verfahren nach Anspruch 3,
**dadurch gekennzeichnet,**
**dass** festgestellt wird, ob und/oder in welchem Maß der Druck im Garraum (15) einen vorgegebenen Druck überschreitet, und dass abhängig von der Höhe der Überschreitung der Öffnungsgrad der Leitung (30) bzw. der Teilleitungen zeitlich gesteuert wird.

5. Verfahren nach Anspruch 3 oder 4,
**dadurch gekennzeichnet,**
**dass** der Öffnungsgrad der Leitung (30) bzw. der Teilleitungen abhängig von der Steilheit der Anstiegskurve des Druckes im Garraum (15) zeitlich gesteuert wird.

6. Verfahren nach einem der vorstehenden Ansprüche, **dadurch gekennzeichnet,**
**dass** der Öffnungsgrad der Leitung (30) bzw. der Teilleitungen zeitlich so gesteuert wird, dass der Druck im Garraum (15) linear abgebaut wird.

7. Verfahren nach einem der Ansprüche 1 bis 5,
**dadurch gekennzeichnet,**
**dass** der Öffnungsgrad der Leitung (30) bzw. der Teilleitungen zeitlich so gesteuert wird, dass der aus dem Garraum (15) abgeführte Dampf mit einem konstanten Volumenstrom abgeführt wird.

8. Verfahren nach einem der vorstehendenAnsprüche,
**dadurch gekennzeichnet,**
**dass** abhängig von dem Volumenstrom des Dampfes die Wassermenge, die eingespritzt wird, gesteuert wird.

9. Verfahren nach einem der vorstehenden Ansprüche,
**dadurch gekennzeichnet,**
**dass** eineAngabe über eine Art eines Gargutes (20) manuell eingegeben, automatisch erfasst oder in einem Garprogramm vorgesehen ist, und dass der Öffnungsgrad der Leitung (30) bzw. der Teilleitungen abhängig von der Art des Gargutes (20) gesteuert wird.

10. Verfahren nacheinemdervorstehendenAnsprüche,
**dadurch gekennzeichnet,**
**dass** eine Geschwindigkeit, mit welcher der Druck abgebaut wird, in Abhängigkeit von der Menge des Gargutes gesteuert wird.

11. Verfahren nach Anspruch 1, **dadurch gekennzeichnet,**
**dass** der Öffnungsgrad der Teilleitungen so aufeinanderabgestimmtwird, dass durch eine stufenweise Änderung des Öffnungsgrades der einzelnen Teilleitungen eine diese Stufen als Feineinteilung einsetzende Steuerung der Öffnungsgrades der resultierenden Leitung erzielt wird.

12. Druckgargerät für Kochgut (20) mit einem Kochbehälter (10), einem Kochgerätedeckel (18) und einem Garraum (15) sowie mit Mitteln zum Abbau des Druckes im Garraum (15), bei dem:
im Kochgerätedeckel (18) oder im Kochbehälter oberhalb des Kochgutes (20) eine Öffnung des Garraums (15) vorgesehen ist,
die Öffnung über eine Leitung (30), insbesondere eine Rohrleitung, mit einem Eingang eines Ablöschkastens (40) verbunden ist,
der Ablöschkasten (40) einen Ausgang aufweist, und
eine Wassereinspritzung (45) vorgesehen ist, über die Wasser in den aus dem Garraum (15) über den Ablöschkasten (40) entweichenden Dampf einspritzbar ist,
wobei eine Ventilanordnung (35) in der Leitung (30) vorgesehen ist, welche mit einer Gerätesteuerung zur zeitabhängigen Steuerung verbunden ist,
**dadurch gekennzeichnet,**
**dass** die Leitung (30) über einen Teilabschnitt aus mehreren strömungstechnisch zueinander parallel verlaufenden Teilleitungen aufgebaut ist, und
**dass** jede dieser Teilleitungen mit einem Ventil, beispielsweise einem Motorventil ausgerüstet ist, welches mit der Gerätesteuerung zur zeitabhängigen Steuerung verbunden ist,
wobei die mehreren Ventile insgesamt die Ventilanordnung (35) bilden.

13. Druckgargerät nach Anspruch 12, **dadurch gekennzeichnet,**
**dass** in der Anordnung (35) zumindest ein Ventil einen Kugelhahn aufweist und/oder
**dass** zumindest ein Ventil den Öffnungsgrad der Teilleitung, in welcher das jeweilige Ventil eingebaut ist, mit einem stufenweise änderbaren Öffnungsgrad ausstattet.

14. Druckgargerät nach Anspruch 12 oder 13, **dadurch gekennzeichnet,**
**dass** eine Messeinrichtung zur Messung des Druckes im Garraum vorgesehen ist, oder
**dass** eine Messeinrichtung zur Messung der Temperatur im Garraum vorgesehen ist,
**dass** die Messeinrichtung zur Messung des Druckes im Garraum und/oder die Messeinrichtung zur Messung der Temperatur im Garraum mit der Gerätesteuerung verbunden ist, und
**dass** die Gerätesteuerung so aufgebaut ist, dass sie aus den zugeführten Messwerten auf den Druck im Garraum unmittelbar oder mittelbar rückschließen kann, und dass sie die Messwerte der Messeinrichtung zur Steuerung der Anordnung (35) mit den Ventilen einsetzt.

15. Druckgargerät nach einem der Ansprüche 12 bis 14, **dadurch gekennzeichnet, dass** die Gerätesteuerung so aufgebaut ist, dass sie eine gargutabhängige und/oder garprogrammabhängige zeitabhängige Steuerung der Anordnung (35) mit den Ventilen und/oder gegebenenfalls eine oder mehrerer vorgesehener Klappen vorsieht.

## Claims

1. Method for breaking down the pressure in the cooking chamber (15) of a pressure cooker with a closable pipe (30) leading from the cooking chamber (15) for discharging the steam from the cooking chamber (15), with a valve assembly (35) and with a water injection unit (40) via which water can be injected into the steam escaping from the cooking chamber (15) through the valve assembly (35) wherein the opening angle of the pipe (30) is controlled in timed manner, **characterised in that** the pipe (30) is formed at least over one partial section by several part pipes which are built with parallel flow relative to one another, and that the opening angle of the pipe (30) is controlled in timed manner such that the opening angle of each one part pipe is controlled in timed manner.

2. Method according to claim 1 **characterised in that** the opening angle of the pipe (30) or the part pipes is controlled in timed manner so that dwell times with a reduced opening angle or a closed pipe (30) or closed part pipes are included between the opened phases.

3. Method according to claim 1 or 2 **characterised in that** a time-restricted opening of the pipe (30) or part pipes and/or an opening with a reduced opening angle takes place in dependence on a pressure measurement in the cooking chamber (15) and/or in dependence on a pressure determination by measuring the temperature and deducing the pressure in the cooking chamber (15).

4. Method according to claim 3 **characterised in that** it is ascertained whether and/or to what extent the pressure inside the cooking chamber (15) exceeds a predetermined pressure, and that the opening angle of the pipe (30) or part pipes is controlled time-wise in dependence on the excess amount.

5. Method according to claim 3 or 4 **characterised in that** the opening angle of the pipe (30) or part pipes is controlled time-wise in dependence on the steepness of the rising curve of the pressure inside the cooking chamber (15).

6. Method according to one of the preceding claims **characterised in that** the opening angle of the pipe (30) or part pipes is controlled time-wise so that the pressure inside the cooking chamber (15) is broken down linearly.

7. Method according to one of claims 1 to 5 **characterised in that** the opening angle of the pipe (30) or of the part pipes is controlled time-wise so that the steam discharged from the cooking chamber (15) is discharged with a constant volume flow.

8. Method according to one of the preceding claims **characterised in that** the amount of water which is injected in is controlled in dependence on the volume flow of the steam.

9. Method according to one of the preceding claims **characterised in that** details about the type of food (20) being cooked are inputted manually, detected automatically or are provided in a cooking program, and that the opening angle of the pipe (30) or part pipes is controlled in dependence on the type of food (20) being cooked.

10. Method according to one of the preceding claims **characterised in that** a rate at which the pressure is broken down is controlled in dependence on the amount of food being cooked.

11. Method according to claim 1 **characterised in that** the opening angles of the part pipes are matched with one another so that through a stepped change in the opening angle of the individual part pipes a control of the opening angle of the resulting pipe is achieved which uses these steps for a fine graduation.

12. Pressure cooker for food (20) with a cooking container (10), a cooker lid (18) and a cooking chamber (15) as well as with means for breaking down the pressure in the cooking chamber (15), in which : an opening to the cooking chamber (15) is provided in the cooker lid (18) or in the cooking container above the food (20), the opening is connected to an inlet of the quenching box (40) by a pipe (30), more particularly a pipeline, the quenching box (40) has an outlet, and a water injection unit (45) is provided via which water can be injected into the steam which is escaping from the cooking chamber (15) via the quenching box (40), wherein a valve assembly (35) is provided in the pipe (30) which is connected to an appliance control for the time-dependent control, **characterised in that** the pipe (30) is made up of a partial section of several part pipes running with parallel flow with one another, and that each of these part pipes is fitted with a valve, by way of example a motor valve, which is connected to said appliance control for the time-dependent control, wherein the plurality of valves overall forms said valve assembly (35).

13. Pressure cooker according to claim 12 **characterised in that** the or at least one valve in the assembly (35) has a ball cock and/or that the or at least one valve sets the opening angle of the pipe (30) or the part pipe in which the relevant valve is installed with a stepwise variable opening angle.

14. Pressure cooker according to claim 12 or 13 **characterised in that** a measuring device is provided for measuring the pressure in the cooking chamber, or that a measuring device is provided for measuring the temperature in the cooking chamber, that the measuring device for measuring the pressure in the cooking chamber and/or the measuring device for measuring the temperature in the cooking chamber is connected to the appliance control, and that the appliance control is constructed so that it can deduce directly or indirectly from the supplied measured values the pressure in the cooking chamber, and that it uses the measured values of the measuring device for controlling the assembly (35) with the valves.

15. Pressure cooker according to one of claims 12 to 14 **characterised in that** the appliance control is constructed so that it provides a food-dependent and/or cooking program dependent time-dependent control of the assembly (35) with the valves and/or where applicable one or more provided flap valves.

## Revendications

1. Procédé pour baisser la pression dans l'espace de cuisson (15) d'un appareil de cuisson à pression pourvu d'une conduite (30) obturable, sortant de l'espace de cuisson (15), pour l'évacuation de vapeur de l'espace de cuisson (15), d'un agencement de soupapes (35) et d'une injection d'eau (45), par l'intermédiaire de laquelle de l'eau peut être injectée dans la vapeur s'échappant de l'espace de cuisson à travers l'agencement de soupapes (35), le taux d'ouverture de la conduite (30) étant contrôlé dans le temps,
**caractérisé en ce que**
la conduite (30) est formée au moins sur une section partielle de plusieurs conduites partielles montées parallèlement entre elles dans la technique des fluides, et
le taux d'ouverture de la conduite (30) étant contrôlé dans le temps du fait que le taux d'ouverture de chaque conduite partielle est contrôlé dans le temps.

2. Procédé selon la revendication 1,
**caractérisé en ce que**
le taux d'ouverture de la conduite (30) ou des conduites partielles est contrôlé dans le temps de sorte que, entre des phases d'ouverture, des temps d'arrêt sont insérées avec un taux d'ouverture réduit ou une conduite fermée (30) ou des conduites partielles fermées.

3. Procédé selon l'une des revendications 1 et 2,
**caractérisé en ce que**
une ouverture limitée dans le temps de la conduite (30) ou des conduites partielles et/ou une ouverture avec un taux d'ouverture réduit s'effectuent en fonction d'une mesure de pression dans l'espace de cuisson (15) et/ou en fonction d'une détermination de la pression par une mesure de la température et déduction de la pression dans l'espace de cuisson (15).

4. Procédé selon la revendication 3,
**caractérisé en ce que**
il est établi si et/ou dans quelle mesure la pression dans l'espace de cuisson (15) dépasse une pression prédéfinie, et le taux d'ouverture de la conduite (30) ou des conduites partielles est contrôlé dans le temps en fonction du niveau du dépassement.

5. Procédé selon l'une des revendications 3 et 4,
**caractérisé en ce que**
le taux d'ouverture de la conduite (30) ou des conduites partielles est contrôlé dans le temps en fonction de la pente de la courbe de montée en pressiondans l'espace de cuisson (15).

6. Procédé selon l'une des revendications précédentes,
**caractérisé en ce que**
le taux d'ouverture de la conduite (30) ou des conduites partielles est contrôlé dans le temps de sorte que la pression dans l'espace de cuisson (15) est baissée linéairement.

7. Procédé selon l'une des revendications 1 à 5,
**caractérisé en ce que**
le taux d'ouverture de la conduite (30) ou des conduites partielles est contrôlé dans le temps, de sorte que la vapeur dissipée de l'espace de cuisson (15) est évacuée avec un débit volumique constant.

8. Procédé selon l'une des revendications précédentes,
**caractérisé en ce que**
la quantité d'eau injectée est contrôlée en fonction du débit volumique de la vapeur.

9. Procédé selon l'une des revendications précédentes,
**caractérisé en ce que**
une indication sur la nature d'un produit à cuire (20) est introduite manuellement, saisie automatiquement ou prévue dans un programme de cuisson, et le taux d'ouverture de la conduite (30) ou des conduites partielles est contrôlé en fonction de la nature du produit à cuire (20).

10. Procédé selon l'une des revendications précédentes,
**caractérisé en ce que**
une vitesse, avec laquelle est baissée la pression, est contrôlée en fonction de la quantité du produit à cuire.

11. Procédé selon la revendication 1, **caractérisé en ce que**
le taux d'ouverture des conduites partielles est mutuellement adapté de sorte que, par une modification graduelle du taux d'ouverture des conduites partielles individuelles, il est obtenu un contrôle, engageant ces étapes sous forme de fine répartition, du taux d'ouverture de la conduite résultante.

12. Appareil de cuisson sous pression pour du produit à cuire (20), comprenant un récipient de cuisson (10), un couvercle d'appareil de cuisson (18) et un espace de cuisson (15), ainsi que des moyens pour baisser la pression dans l'espace de cuisson (15), appareil dans lequel:
il est prévu une ouverture de l'espace de cuisson (15) dans le couvercle (18) de l'appareil de cuisson ou dans le récipient de cuisson au-dessus du produit à cuire (20), l'ouverture est raccordée par l'intermédiaire d'une conduite (30), en particulier une tuyauterie, à une entrée d'un caisson d'extinction (40), le caisson d'extinction (40) présente une sortie, et il est prévu une injection d'eau (45), par l'intermédiaire de laquelle de l'eau peut être injectée dans la vapeur s'échappant de l'espace de cuisson (15) à travers le caisson d'extinction (40), un agencement de soupapes (35) étant prévu dans la conduite (30), lequel est relié à une commande d'appareil pour le contrôle en fonction du temps,
**caractérisé en ce que**
la conduite (30) est structurée sur une section partielle de plusieurs conduites partielles s'étendant parallèlement entre elles dans la technique des fluides, et chacune de ces conduites partielles est équipée d'une soupape, par exemple une soupape à moteur, qui est reliée à la commande d'appareil pour le contrôle en fonction du temps,
les multiples soupapes formant dans l'ensemble l'agencement de soupapes (35).

13. Appareil de cuisson sous pression selon la revendication 12,
**caractérisé en ce que**
dans l'agencement (35), au moins une soupape présente un robinet à tournant sphérique et/ou au moins une soupape munit le taux d'ouverture de la de la conduite partielle, dans laquelle est montée la soupape respective, d'un taux d'ouverture modifiable progressivement.

14. Appareil de cuisson sous pression selon l'une des revendications 12 et 13,
**caractérisé en ce que**
il est prévu un dispositif de mesure pour mesurer la pression dans l'espace de cuisson, il est prévu un dispositif de mesure pour mesurer la température dans l'espace de cuisson, le dispositif de mesure pour mesurer la pression dans l'espace de cuisson et/ou le dispositif de mesure pour mesurer la température dans l'espace de cuisson sont reliés à la commande d'appareil, et la commande d'appareil est structurée de sorte qu'elle peut conclure directement ou indirectement, à partir des valeurs de mesure transmises, de la pression dans l'espace de cuisson, et elle emploie les valeurs de mesure du dispositif de mesure pour le contrôle de l'agencement (35) pourvu des soupapes.

15. Appareil de cuisson sous pression selon l'une des revendications 12 à 14,
**caractérisé en ce que**
la commande d'appareil est structurée de sorte qu'elle prévoit un contrôle en fonction du temps, en fonction du produit à cuire et/ou en fonction du programme de cuisson, de l'agencement (35) pourvu des soupapes et/ou éventuellement d'un ou de plusieurs clapets prévus.
